Europäisches Patentamt

European Patent Office

Office européen des brevets

(11) Publication number: 0 369 782 A2

# EUROPEAN PATENT APPLICATION

(21) Application number: 89311871.1

(22) Date of filing: 16.11.89

(51) Int. Cl.⁵: H02H 3/24, H02H 11/00

(30) Priority: 18.11.88 JP 293259/88

(43) Date of publication of application:
23.05.90 Bulletin 90/21

(84) Designated Contracting States:
CH DE GB LI

(71) Applicant: SEIKO INSTRUMENTS INC.
31-1, Kameido 6-chome Koto-ku
Tokyo 136(JP)

(72) Inventor: Horikoshi, Ichiro c/o SEIKO
INSTRUMENTS INC.
31-1 Kameido 6-chome Koto-ku
Tokyo(JP)

(74) Representative: Caro, William Egerton et al
J. MILLER & CO. Lincoln House 296-302 High
Holborn
London WC1V 7JH(GB)

(54) Drive circuit for operating an appliance such as a printer.

(57) A drive circuit for an output device, such as a printer or the like, has a processing unit (4) for generating control signals for controlling the output device, and driving means (6) operable by the control signals for driving the output device. The drive circuit also has a power supply (1), and voltage detecting means (3) for detecting a drop in the voltage supplied by the power supply below a pre-determined level higher than a minimum operating voltage for the processing means. The voltage detecting means are arranged to co-operate with the driving means so as to inhibit operation of the output device when the power supply voltage drops below the pre-determined level.

FIG. 2

# DRIVE CIRCUIT FOR OPERATING AN APPLIANCE SUCH AS A PRINTER

This invention relates to a drive circuit for operating an appliance such as a printer.

A prior art drive circuit for controlling both an appliance, such as a printer or the like, which consumes a substantial amount of electrical power and time display means, such as an electronic timepiece, has typically involved the use of a commercial 100 V AC power supply because of the large consumption of power. A desired voltage is obtained by reducing the voltage level of the commercial 100 V AC power supply by the use of an AC adapter, thus providing a power source for the appliance and for the time display means. However, such a power source has a poor portability and so, as an alternative, an arrangement in which a battery, e.g. a dry battery, is employed as a power supply has been considered.

In the case of the battery, a drop in the battery voltage takes place concomitantly with the use of the battery. When the battery voltage reduces below the minimum operating voltage ($V_{ST}$) of processing means in the drive circuit for controlling the appliance and if $V_{ST}$ of the processing means is higher than the minimum operating voltage of the appliance, the processing means will cease to operate and will thereby produce only a destabilised appliance control signal even though the voltage of the battery may still be enough to drive the appliance. This will probably result in a malfunction of the appliance.

If the appliance is supplied with power by a separate battery from that associated with the processing means, there exists a high probability that the appliance will still remain operable, concomitant with the use of the two batteries, in spite of the processing means ceasing operation as a result of the voltage drop and irrespective of the values of the minimum operating voltages. Consequently, the foregoing problem becomes more serious.

It is, therefore, an object of the invention to provide a drive circuit which prevents a malfunction of an appliance caused by a decrease in the voltage supplied to processing means of the drive circuit.

According to the present invention, there is provided a drive circuit for an output device for providing output information, comprising processing means for generating control signals for controlling the output device, driving means operable by the control signals for driving the output device, and characterised by voltage detecting means arranged to detect a drop in the voltage supplied by a power supply for the processing means below a pre-determined level higher than a minimum operating voltage for the processing means and to co-operate with the driving means so as to inhibit operation of the output device when the voltage supplied by the power supply is below the pre-determined level.

A preferred embodiment of the invention described below features processing means, voltage detecting means for receiving as an input a voltage from a battery for powering the processing means and for generating an output signal whose level varies when the input voltage is lower than a pre-determined threshold voltage $V_T$, and driving means for driving the output device in response to the output signal from the voltage detecting means and control signals from the processing means, the voltage detecting means and the driving means being arranged such that the output signal from the voltage detecting means inhibits operation of the output device before operation of the processing means is stopped in that the threshold voltage $V_T$ is selected to be greater than a minimum operating voltage $V_{ST}$ of the processing means.

Consequently, the invention, at least in its preferred form, ensures that operation of the output device is inhibited before operation of the processing means ceases.

As a result, it is possible to avoid a malfunction of the output device even in the event that the control signals from the processing means become unstable due to a drop in the power supply voltage. This also has the advantage of eliminating the risk of damage to the output device.

The invention is described further, by way of example, with reference to the accompanying drawings, in which:-

Figure 1 is a block diagram showing one embodiment of drive circuit according to the present invention;

Figure 2 is a more detailed circuit diagram of the drive circuit of Figure 1; and

Figure 3 is a timing chart showing the voltage levels at respective locations of the circuit shown in Figure 2.

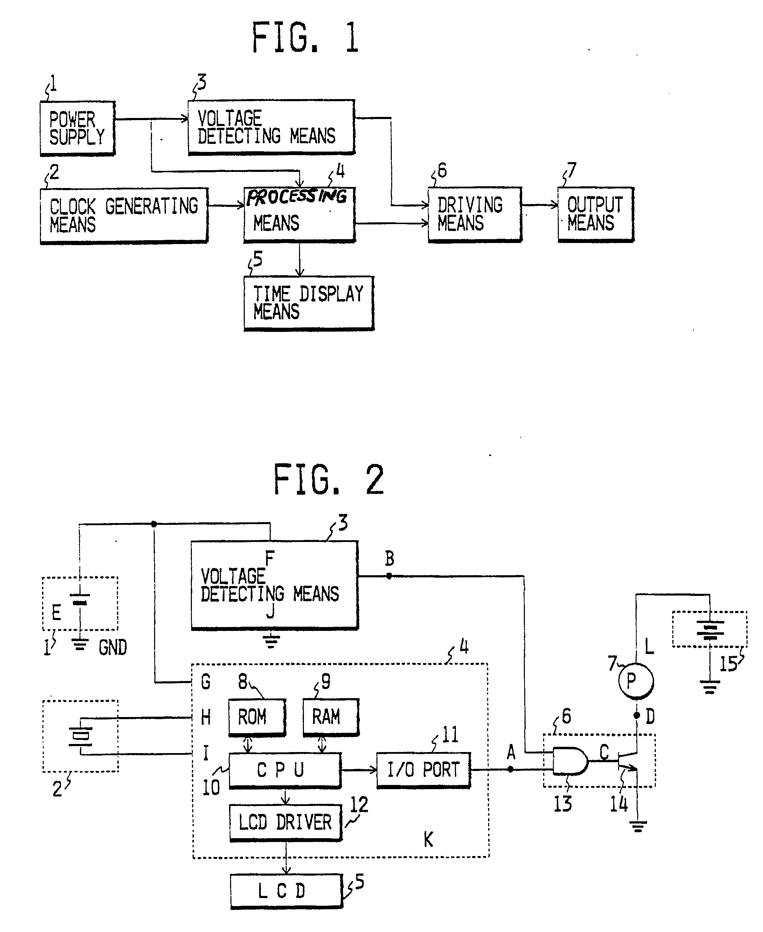

The drive circuit shown in the drawings has a time keeping function and displays and prints time information through a display and a printer, respectively. Turning first to Figure 1, a power supply 1 comprises a battery, such as a manganesian battery, an alkaline battery, a silver oxide battery, or a secondary cell. Clock signal generating means 2, composed of a crystal or the like, serve to supply a clock signal to processing means 4. Voltage detecting means 3 receive the output from the power supply 1 and supply an output or detection signal whose level varies in accordance with the input voltage level. The processing means 4 have a timing function and generate a control signal for controlling driving means 6 for driving an appliance 7, that is a printer in this instance, as well as a time display signal for supply to time display means 5. The printer 7 consumes a substantial amount of electric power.

Referring to Figure 2, the circuit shown in Figure 1 and in particular the processing means 4 and the driving means 6 will be described in greater detail.

A read only memory (hereinafter referred to as a ROM) 8 has pre-stored therein a program for the timing function of the processing means 4 and also control data for the printer 7. A random access memory (hereinafter referred to as a RAM) 9 stores time data and data indicating a state of the printer 7, the writing of data to and the reading of data from the RAM 9 being under the control of a central processing unit (hereinafter referred to as a CPU) 10. The CPU 10 generates a count according to the time data in the RAM 9 and outputs printer control signals and supplies the same to the driving means 6 via an I/O port 11 so that the printer 7 prints the time information. The I/O port 11 power amplifies the control signals for the printer 7 and transmits the power amplified control signals to the driving means 6. A two-input AND gate 13 and an NPN transistor 14 are combined to constitute the driving means 6 and a second power supply 15 is provided for driving the printer 7. In addition, the CPU 10 outputs signals representing the time data of the RAM 9 via an LCD driver 12 to the time display means 5, which comprise an LCD. The LCD driver 12 latches the time data signals from the CPU 10 and power amplifies the same preparatory to output. The processing means 4 consist of the ROM 8, the RAM 9, the CPU 10, the I/O port 11 and the LCD driver 12.

A negative pole of the power supply 1 is connected to ground (hereinafter referred to as GND), while a positive pole thereof is connected to a positive input terminal F of the voltage detecting means 3 and also to an input terminal G of the processing means 4. The clock signal generating means 2 are connected to clock terminals H and I of the processing means 4. A negative terminal J of the voltage detecting means 3 is connected to the GND, while an output terminal B is connected to one input of the AND gate 13.

The CPU 10, the ROM 8 and the RAM 9 are connected to each other via a bus line through which bi-directional transmission of signals can be performed. The CPU 10 is uni-directionally connected to the LCD driver 12 to transmit the time data signals to the LCD driver 12. The LCD driver 12 is uni-directionally connected to the LCD 5. The CPU 10 is likewise uni-directionally connected to the I/O port 11. An output terminal A of the I/O port 11 is connected to the other input of the AND gate 13. A negative terminal K of the processing means 4 is connected to the GND.

An output C of the AND gate 13 is connected to a base of the transistor 14, which further has a collector connected to a negative terminal D of the printer 7 and an emitter connected to the GND. A positive terminal L of the printer 7 is connected to a positive pole of the second power supply 15, whose negative pole is connected to the GND.

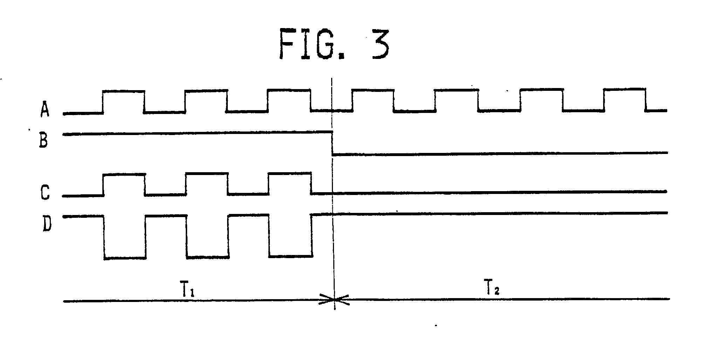

The operation of the drive circuit as shown in Figure 2 will now be described with reference to Figure 3, which is a timing chart showing the voltage levels at respective locations of the drive circuit.

When $E_O > V_T$, where $E_O$ is the voltage supplied by the power supply 1, the output terminal B of the voltage detecting means 3 is at substantially the same potential as the positive pole of the power supply 1 (this potential is hereinafter referred to as "H", while that of the GND is referred to as "L"). Hence, the output of the AND gate 13 is determined by the other input, i.e. by the output of the I/O port 11 of the processing means 4. Immediately a command signal for initiating driving of the printer is transmitted from a button switch (not illustrated) to the processing means 4, the CPU 10 reads control data from the ROM 8 to convert such data into control signals, which are in turn output from the output terminal A by the I/O port 11. The signal at the output terminal A of the I/O port 11 is input to the AND gate 13. The output C of the AND gate 13, and hence the base of the transistor 14, assumes a level identical with that of the output terminal A. Now, when the base of the transistor 14 is raised to the level "H", the transistor becomes conductive, whereas, when the base is at the level "L", the transistor is in a non-conductive state. A signal at the collector D of the transistor 14, which is in opposite phase with respect to the signal at the output C of the AND gate 13 and which has a potential level varying between that of the positive pole of the second power supply 15 and that of the GND, is thus generated. When the collector D of the transistor 14 assumes the potential level of the GND, a voltage from the second power supply 15 is impressed on the printer 7, whereby a driving state arises. More specifically, when the output C of the AND gate 13 assumes the level "H", the driving state is developed. Referring to the timing chart of Figure 3, the respective signals at the various circuit locations in the driving state are shown in the interval designated T1.

When $E_O \leq V_T$, the output terminal B of the voltage detecting means 3 assumes the level "L" and so the corresponding input of the AND gate 13 is at the level "L". The output C of the AND gate 13 is thereby brought to the level "L". The output C of the AND gate 13 assumes the level "L" irrespective of the signal transmitted from the processing means 4. Since the output C of the AND gate 13 is at the level "L", the transistor 14 remains non-conductive, and there is no application of voltage from the second power supply 15 to the printer 7, with the result that the printer 7 is not driven. This state is shown in the interval designated T2 in Figure 3.

Thus, the level of the output C of the AND gate 13 is controlled by the level of the output B of the voltage detecting means 3 and, when $E_O \leq V_T$, the operation of the driving means 6 is inhibited.

In accordance with the present invention, the threshold voltage $V_T$ of the voltage detecting means 3 are set to be higher than the minimum operating voltage $V_{ST}$ of the processing means 4. Therefore, before the signal of the processing means 4, which is to be transmitted to the driving means 6, becomes unstable due to a drop in the power supply voltage, the operation of the printer is inhibited, thereby preventing a malfunction of the printer due to a decrease in the power supply voltage.

## Claims

1. A drive circuit for an output device for providing output information, comprising processing means (4) for generating control signals for controlling the output device, driving means (6) operable by the control signals for driving the output device, and characterised by voltage detecting means (3) arranged to detect a drop in the voltage supplied by a power supply for the processing means below a pre-determined level higher than a minimum operating voltage for the processing means and to co-operate with the driving means so as to inhibit operation of the output device when the voltage supplied by the power supply is below the pre-determined level.

2. A drive circuit according to claim 1 characterised in that the voltage detecting means are arranged to generate a detection signal whose level varies depending on the level of the voltage supplied by the power supply in relation to the pre-determined level.

3. A drive circuit according to claim 1 or 2 characterised in that the driving means are arranged to receive the control signals from the processing means as a first input and an output from the voltage detecting means as a second input.

4. A drive circuit according to claim 1, 2 or 3, characterised in that the driving means comprise inhibiting means (13, 14) for inhibiting the supply of a driving signal for driving the output device.

5. A drive circuit according to claim 4 characterised in that the inhibiting means include switching means (14).

6. A drive circuit according to any preceding claim characterised in that the processing means include time keeping means (9, 10) for counting a present time.

7. Apparatus characterised by a printer (7), and a drive circuit according to any preceding claim for driving the printer.

8. Apparatus according to claim 7 characterised by display means (5) for displaying the output information.

9. An electronic apparatus comprising arithmetic means (4) for controlling an output device (7) so as to output information, a power supply (1) for said arithmetic means, driving means (6) operable in response to a control signal from said arithmetic means to output a driving signal to said output device, and characterised by voltage detecting means (3) for detecting a pre-determined voltage of said power supply which is higher than a minimum operating voltage of said arithmetic means, the voltage detecting means having output means for outputting a signal whose level varies depending on a detection of said pre-determined voltage, said driving means being arranged to receive the output signal from the voltage detecting means and including inhibiting means for inhibiting the output of the driving signal at the time that the voltage of the power supply is smaller than said pre-determined voltage.

# FIG. 1

POWER SUPPLY *1*

VOLTAGE DETECTING MEANS *3*

CLOCK GENERATING MEANS *2*

PROCESSING MEANS *4*

TIME DISPLAY MEANS *5*

DRIVING MEANS *6*

OUTPUT MEANS *7*

# FIG. 2

VOLTAGE DETECTING MEANS *3*

F

J

E

1  GND

2

ROM *8*

RAM *9*

G

H

I

10

C P U

I/O PORT *11*

LCD DRIVER *12*

K

L C D *5*

A

B

C

D

6

13

14

7  P

L

15

# FIG. 3